# EUROPEAN PATENT SPECIFICATION

(11) **EP 2 785 077 B1**
(45) Date of publication and mention of the grant of the patent: **30.08.2017**
(21) Application number: 13305377.7
(22) Date of filing: 27.03.2013
(51) Int. Cl.: H04W 4/00, H04W 74/08, H04W 8/26

(54) **Implicit addressing for sporadic machine-type access**
Implizite Adressierung für sporadischen maschinenartigen Zugriff
Adressage implicite pour accès sporadique de type machine

(43) Date of publication of application: 01.10.2014
(73) Proprietor: ALCATEL LUCENT, 92100 Boulogne-Billancourt (FR)
(72) Inventor: Wild, Thorsten, 70435 Stuttgart (DE); Fonseca Dos Santos, André, 70435 Stuttgart (DE); Schaich, Frank, 70435 Stuttgart (DE)
(74) Representative: Wetzel, Emmanuelle

(56) References cited:
- WO-A1-2011/150768
- WO-A1-2012/056210
- WO-A1-2012/171800
- US-A1- 2012 083 204
- INSTITUTE FOR INFORMATION INDUSTRY (III): "MTC coverage improvement through precoding of spreading code", 3GPP DRAFT; R1-130357, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian; 20130128 - 20130201 18 January 2013 (2013-01-18), XP050663438, Retrieved from the Internet: URL:http://www.3gpp.org/ftp/tsg_ran/WG1_RL 1/TSGR1_72/Docs/ [retrieved on 2013-01-18]

## Description

### FIELD OF THE INVENTION

The present invention relates to a method for identifying a terminal or user equipment (UE) in a wireless system.

### BACKGROUND OF THE INVENTION

This section introduces aspects that may be helpful in facilitating a better understanding of the invention. Accordingly, the statements of this section are to be read in this light and are not to be understood as admission about what is in the prior art.

In enhanced 4G wireless systems and especially in future 5G wireless systems, a large number of devices, e.g. user equipment devices (UE), will be present in the coverage area of a base station, e.g. an eNodeB. Many of these devices access the network only sporadically. These devices are machine-type devices (MTC), e.g. sensor devices. Sporadic traffic may also be caused by smartphone applications which only carry a few bits in the uplink, e.g. for triggering updates, calling weather forecasts or newsfeed updates.

In order to identify the user equipment devices, each device has its explicit address. When communicating with the base station, the explicit address has to be transmitted to the base station, causing overhead data. In case of a large number of user equipment devices, the explicit addresses need to provide a large address room, and hence the explicit addresses need to be long addresses. The longer the addresses are the more overhead data is produced. The overhead grows in relative size. When the amount of information data to be transmitted is comparatively small, the size of the actual explicit address data gets into the same order as the information data. This is the case e.g. in the mentioned MTC scenario.

The classical way of handling a large number of users in 4G wireless systems, e.g. LTE-A systems, is to use active state (RRC_CONNECTED) and idle state (RRC_IDLE). Devices which are not expected to have data to transmit for a longer time period are in idle state.

Devices which are idle or users which are active but not uplink-synchronized have to use the random access procedure before being able to transmit data. Furthermore, if there is no uplink resource allocated to a device for sending a scheduling request (SR), devices use the random access channel (RACH) to send a scheduling request (SR).

A random access procedure contains the following steps:
- Preamble transmission;
- Random access response;
- Layer 2 / Layer 3 (L2/L3) message;
- Contention resolution message.

In a future scenario with sporadic traffic and a large number of machine-type devices, e.g. the so called internet of things, these devices will waste resources by causing a huge random access procedure overhead.

### SUMMARY OF THE INVENTION

It is an object of the invention to enable efficient sporadic low-rate data transmission in such a scenario.

According to one embodiment, a method for detecting an implicit user ID of a received data packet is proposed. When a data packet is received, at least one transmission parameter of the data packet is determined. An implicit user ID of the data packet received is determined in dependence of the at least one transmission parameter.

A transmission parameter of the data packet received is to be understood as a parameter derivable from the data packet at the side of the receiver, e.g. the base station. Such a parameter is e.g. related to the coding of the data packet, a parameter of the RF signal used to transmit the data packet, etc. Examples of transmission parameters are discussed in the following.

An implicit user ID is to be understood as information related to the origin of the data packet, which is derivable from the data packet itself, e.g. from the physical characteristics of the received signal carrying the data packet, the direction of origin of the received signal, the encoding scheme of the data packet, etc. While an explicit address is composed of additional bits added to the user data of a data packet as an overhead in order to identify the origin of the data packet, the implicit user ID is derivable from the transmitted user data itself without adding additional bits.

Determining an implicit user ID of the data packet in dependence of the at least one determined transmission parameter has the advantage that transmission of explicit address data can be omitted, as the source of the data packet is determined by the implicit user ID. The information needed for determining the implicit user ID is available in the data packet anyway. Thus, no overhead data need to be sent to transmit such information and the overhead in the data transmission is reduced. Uplink synchronization is skipped for sporadic traffic. User equipment devices transmit their data right away in asynchronous manner. This is especially beneficial in future scenarios with a huge number of devices, each one generating only sporadic traffic on the network.

In one embodiment, a transmission parameter of the received data packet is its spreading code sequence, which was used for encoding the data packet. The spreading code sequence is determined and is used to determine the implicit user ID. The spreading code sequence is necessary to demodulate the received data packet anyway, thus using the spreading code sequence to determine the implicit user ID has the advantage that information which is available anyway is used.

In one embodiment, the spreading code sequence used for encoding the data packet, and thus the spreading code sequence determined by the method for detecting an implicit user ID is a tree structure spreading code sequence. An example for a tree structure spreading code sequence is e.g. a Walsh-Hadamard sequence. The spreading code sequence of a data packet which was encoded by a tree structure spreading code sequence is e.g. determined by a correlator-based tree-search of spreading subsequence sets. This reduces the processing complexity for determining the spreading code sequence significantly.

In one embodiment, a transmission parameter of the received data packet is at least one frequency on which the data packet has been received. In case of frequency multiplexing, the frequency on which a data packet was received is a discriminator to identify different origins of the data packet.In one embodiment, the data packet is received via a multi-carrier transmission system. Multi-carrier transmission systems are e.g. orthogonal frequency division multiplexing (OFDM) or filter-bank based multi-carrier (FBMC) transmission systems. In such a system, sub-band information or physical resource blocks (PRBs) are used to determine the at least one frequency on which the data packet is received. Alternatively, or in addition, a set of PRBs or a hopping pattern across a set of PRBs over time is used to determine the at least one frequency on which the data packet is received. This information is derived during processing of the received data packet and is used to define the address space of the implicit user IDs. FBMC systems have the advantage that side-lobes of the asynchronous signals of different devices are much weaker and thus have reduced inter-carrier interference (ICI) between neighboring carriers of different devices.

In one embodiment, the signal format is a combination of spreading and a multi-carrier transmission system, like multi-carrier CDMA (MC-CDMA), which is a combination of OFDM and CDMA. Instead of OFDM, other filter-bank-based multi-carrier techniques like FBMC may be used.In one embodiment, a single carrier system is used for transmission. Transmission systems using a single carrier are e.g. discrete fourier transform (DFT)-precoded OFDM transmission systems as a variant of single-carrier frequency-division multiple access (SC-FDMA) transmission systems.

In one embodiment, a multi-antenna receiver is used for receiving the data packet. The multi-antenna receiver indicates the spatial direction from which the data packet is received and allows estimation of the location of the user. This spatial signature is used to determine the implicit user ID. This offers one further degree of freedom for assigning implicit user IDs and expands the address room of implicit user IDs. In machine-type communication (MTC) systems, using spatial properties is attractive as many user equipment devices are sensor devices, which typically do not move. Their spatial characteristic is rather stable and provides reliable information for an implicit user ID.

In one embodiment, the power level of the signal of the received data packet is determined. In case the sender power is known, e.g. because it is the same for all user equipment devices, the received power level indicates the distance between the user equipment device and the receiver, as the attenuation of the signal is proportional to the distance between the user equipment device and the receiver. The determined power level is used to determine the implicit user ID. This offers one further degree of freedom for assigning implicit user IDs and expands the address room of implicit user IDs. In this way, the amount of implicit user IDs is significantly enhanced for applications that are employed over a large area.

In one embodiment, a look-up table is provided with stored characteristics of the user equipment devices which are registered. The look-up table includes one or multiple of the above mentioned characteristics, e.g. frequency, spreading code sequence, spatial characteristic and power level. The look-up table provides a fast way to determine the implicit user ID of a data packet received by comparing the determined characteristics of the data packet and the characteristics stored in the look-up table.

In one embodiment, the receiver assigns the implicit user ID characteristics to the user equipment devices e.g. using forward control signaling or higher layer control signaling.

In one embodiment, the data packet received contains an explicit address of the user. The explicit address is transmitted in an address field within the transmitted data. The user equipment device is identified by a mix of implicit and explicit address information. This has the advantage that the address space provided by the explicit address is enhanced by combining it with the implicit user ID and thus, the overall address space is enhanced. On the other hand, if the address space of the implicit user ID is not large enough to support all user equipment devices in the range of the receiver, the implicit address space is enhanced by additional explicit addresses transmitted in combination with the data. Especially in machine type communication scenarios with many user devices, this enhancement of the address space is desirable.

In one embodiment, an apparatus for receiving a data packet in a transmission system is proposed, wherein the apparatus performs a method according to the embodiments as described above.

In one embodiment, a transmission system for sending a data packet from a sender to a receiver is proposed. The transmission system comprises at least one apparatus for sending a data packet. The apparatus for sending the data packet applies a spreading code sequence for coding the data packet to be sent. Further, the transmission system comprises at least one apparatus for receiving a data packet as described in the embodiment above.

### BRIEF DESCRIPTION OF THE DRAWINGS

Some embodiments of apparatus and methods in accordance with embodiments of the present invention are now described, by way of examples only, and with reference to the accompanying drawings, in which:
- Fig. 1: shows a machine-type communication scenario
- Fig. 2: shows a schematic overview of a receiver device
- Fig. 3: shows a flow chart for detecting an implicit user ID

### DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

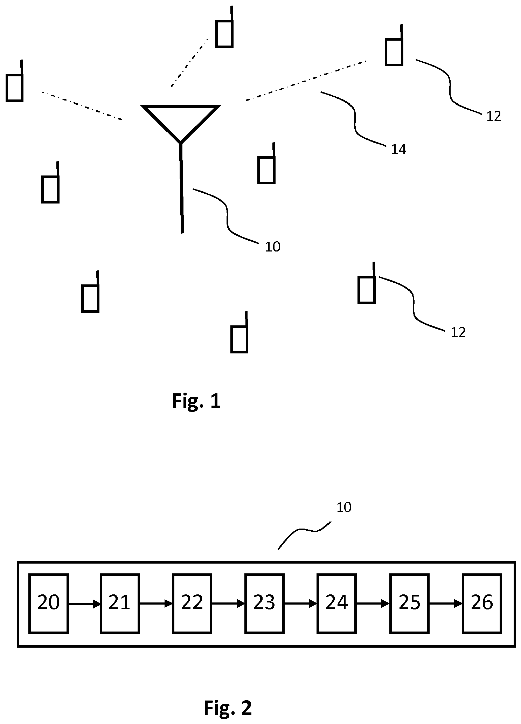

Fig. 1 shows a machine type communication scenario according to a preferred embodiment, comprising a receiver 10, e.g. a base station in a 4G wireless system or a 5G wireless system, and associated user equipment devices 12. User equipment devices 12 and receiver 10 are located within the communication range of these devices and communication is performed via a transmission channel 14, which is e.g. a wireless transmission channel. For the communication, either a multi-carrier transmission system, e.g. OFDM or FBMC, or a single carrier transmission system, e.g. SC-FDMA or DFT-precoded OFDM, is used.

In Fig. 2, a schematic overview of a receiver 10 according to a preferred embodiment is shown. It is understood that only elements related to the invention are indicated in Fig. 2 but that a receiver 10 comprises additional means for performing its functionality. Such means are well known in the art and thus, are not mentioned explicitly. The receiver 10 comprises an antenna 20, which is either an antenna for single-channel communication or multi-channel communication. According to one embodiment, the antenna 20 is equipped to distinguish signals spatially. In e.g. antenna systems with controllable directivity like patch antenna arrays, input signals are distinguishable by their receiving direction. Such an embodiment comprises a spatial discriminator 21 for analyzing the direction from which the signal is received. In one embodiment, the receiver 10 is equipped with multiple antenna elements which are e.g. phase-calibrated. The signals for each element are received in an RF chain, including e.g. filtering, mixing, low noise amplification and analog-to-digital conversion. The spatial processing may be performed in combination with the digital baseband processing of the multiple antenna inputs. Direction-finding algorithms like MUSIC or ESPRIT may be used for spatial discremination. Other examples include the usage of channel estimation based on training/pilot/reference symbols or by blind channel estimation methods. From the estimated channels, different metrics may be used to judge the spatial properties of the devices for spatial separation. In one embodiment, the channel covariance matrix of a device is deduced from the estimated channel, and then its largest eigenvector is computed. In a typical macro-cellular environment, if the scalar product of this eigenvector with the largest eigenvector of another device is small, they are well separable in space. Thus, it is determined if signals of different devices lie in different subspaces. In one embodiment, the receiver comprises a power measurement unit 22 for determining the power level of the signal received, e.g. based on pilot symbols or on blind channel estimation or, in case of spreading, based on the output power of a correlator. Further, the receiver 10 comprises a frequency detector 23 for determining the frequency on which a data packet is received. A spreading code detector 24 for determining the spreading code sequence which was used for encoding the data packet is provided. In one embodiment, the spreading code space is scanned by a correlator, measuring the output power of the different spreading sequences in order to detect activity. As device activity in a MTC system with sporadic traffic is sparse, also methods of compressed sensing may be used for activity detection of the respective spreading codes. In one embodiment, the spreading code detector 24 performs a correlator-based tree-search of spreading subsequence sets, in case the data packet was encoded by a tree structure spreading code sequence, e.g. a Walsh-Hadamard sequence. In one embodiment, the receiver 10 comprises a look-up table 25 with the stored characteristics of the devices which are registered in order to determine the implicit user ID. Such a look-up table 25 contains e.g. possible combinations of spreading code and frequency and associates for each of those combinations one stored implicit user ID. In one embodiment, an address decoder 26 for decoding an explicit address which is transmitted with the received data packet is provided. The explicit address and the implicit address ID are combined to identify the user equipment device 12. The structural elements described above are of exemplary nature only. It is understood that not all of these elements are necessarily present when implementing the invention and a change of their sequence is also within the scope of the invention. Examples given for the structural elements are only to support understanding of the invention and do not restrict the implementation to these examples.

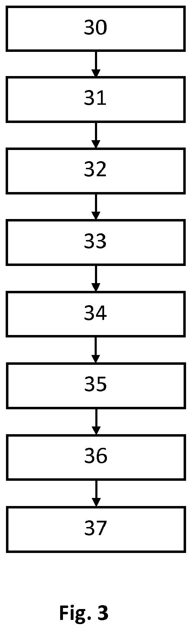

In Fig. 3, a schematic overview for identifying a user equipment device 12 and for detecting an implicit user ID of a user equipment device 12 by a receiver 10, e.g. a base station, is disclosed. First, a data packet sent by a user equipment device 12 is received 30. The data packet is received e.g. by a multi-carrier system or single-carrier system as described above. A transmission frequency of the received data packet is determined in step 31. In a multi-carrier system, the transmission frequency is a sub-band or PRB or a hopping pattern of PRBs over time. In step 32, the spreading code sequence of the data packet received is determined. Thus, the implicit code-based information of the data packet is analyzed. In one embodiment, the spreading code sequences are arranged in a tree structure, e.g. Walsh-Hadamard sequences, which can be efficiently scanned and analyzed. A correlator-based tree-search or other known methods are used to determine the spreading code sequence sets and its subsequence sets. In one embodiment, the location of the user equipment device 12 in correlation to the receiver 10 is determined. In step 33, a spatial signature is determined in embodiments which allow spatial discrimination of received signals. The spatial signature is the information in which direction from a viewpoint of the receiver 10 the corresponding user equipment device 12 is located. Determining the special signature is feasible, e.g. if the receiver 10 is equipped with several antennas 20. If the spatial signature clearly differs, a spatial re-use between a set of user equipment devices 12 can be done by assigning the same spreading code sequence and frequency including hopping pattern to different user equipment devices 12. Criteria for differentiating the spatial signature are e.g. different receive covariance matrices, clearly different directions of arrival, orthogonal uplink receive channel vectors and orthogonal preferred downlink precoding matrix indicators (PMI) from feedback signaling. In one embodiment, in order to further determine the location of the user equipment device 12 in correlation to the receiver 10, the distance between the user equipment device 12 and the receiver is determined in step 34. A measure for this distance is the signal power received at the receiver 10, provided that the signal power which has been used for sending the data packet by the user equipment device 12 is known. In MTC scenarios using sensor devices as described above, the sending power of the user equipment devices 12 is known at the receiver 10. In step 35, the information determined in the preceding steps is compared to values stored in a look-up table 25. The look-up table contains characteristic values of the user equipment devices 12 with regard to the corresponding receiver 10. Using these values, the implicit user ID is determined 37. If the received data packet contains also an explicit address, this address is determined in step 36. Afterwards, the user equipment device 12 which sent the received data packet is identified by the implicit user ID or by a combination of the implicit user ID and the explicit address. It is understood that the above described steps are not described in a chronological order. According to the invention, not necessarily all steps need to be performed for determining the implicit user ID and the sequence of performing the steps can be changed within the scope of the present invention.

In an exemplary embodiment with 100 PRBs and a spreading factor of 24, in case of one PRB transmission, 2400 implicit user IDs are available using spreading code sequence and frequency as distinguishing feature. A receiver equipped with four antennas with such a large set of users can easily find at least pairs of users being spatially orthogonal, thus increasing the implicit address space to 4800 devices. Using an eight bit explicit address in combination with the implicit user ID allows distinguishing more than a million user equipment devices 12 within the range of one receiver 10.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method for detecting an implicit user ID of a received data packet, comprising the steps:
- receiving (30) a data packet composed of at least user data and an additional explicit address,
- determining (36) the explicit address of the received data packet,
- determining at least one transmission parameter of the user data of the received data packet,
- determining (37) an implicit user ID of the data packet in dependence of the at least one determined transmission parameter, and
- combining the implicit user ID and the explicit address to identify the origin of the data packet.

2. Method for detecting an implicit user ID according to claim 1, wherein the step of determining at least one transmission parameter comprises:
- determining (32) a spreading code sequence of the received data packet.

3. Method for detecting an implicit user ID according to claim 2, wherein the spreading code sequence determined is a tree structure spreading code sequence.

4. Method for detecting an implicit user ID according to one of claims 1 to 3, wherein the step of determining at least one transmission parameter comprises:
- determining (31) at least one frequency on which the data packet has been received.

5. Method for detecting an implicit user ID according to one of claims 1 to 4, wherein the data packet is received via a multi-carrier transmission system.

6. Method for detecting an implicit user ID according to claim 4, wherein the determined at least one frequency corresponds to a physical resource block, a set of physical resource blocks or a hopping pattern across a set of physical resource blocks.

7. Method for detecting an implicit user ID according to one of claims 1 to 3, wherein the data packet is received via an SC-FDMA or a DFT-precoded OFDM transmission system.

8. Method for detecting an implicit user ID according to claim 5 or 6, wherein the data packet is received via an OFDM or an FBMC transmission system.

9. Method for detecting an implicit user ID according to one of claims 1 to 6, wherein the step of determining at least one transmission parameter comprises:
- determining (33) the spatial signature of the received data packet in a multi-antenna receiver.

10. Method for detecting an implicit user ID according to one of claims 1 to 9, wherein the step of determining at least one transmission parameter comprises:
- determining (34) the power level of the received data packet.

11. Method for detecting an implicit user ID according to one of claims 1 to 10, further comprising the step:- comparing (35) the determined transmission parameters of the received data packet with stored characteristics of user equipment devices registered, the characteristics of devices registered being stored in a look-up table.

12. Method for detecting an implicit user ID according to one of claims 1 to 11, further comprising the step
- assigning characteristics to the user equipment devices by forward control signaling or higher layer control signaling.

13. Apparatus (10) for receiving a data packet in a transmission system, wherein the apparatus performs a method according to one of claims 1 to 12.

14. Transmission system for sending a data packet from a sender (12) to a receiver (10), wherein the transmission system comprises at least one apparatus for sending (12) a data packet, the apparatus for sending (12) the data packet applies a spreading code sequence for coding the data packet to be sent and the transmission system further comprises at least one apparatus for receiving (10) a data packet according to claim 13.

## Patentansprüche

1. Verfahren zum Erkennen einer impliziten Benutzer-ID eines empfangenen Datenpakets, umfassend folgende Schritte:
- Empfangen (30) eines Datenpakets, das mindestens aus Benutzerdaten und einer zusätzlichen expliziten Adresse besteht,
- Bestimmen (36) der expliziten Adresse des empfangenen Datenpakets,
- Bestimmen mindestens eines Übertragungsparameters der Benutzerdaten des empfangenen Datenpakets,
- Bestimmen (37) einer impliziten Benutzer-ID des Datenpakets in Abhängigkeit von dem mindestens einen bestimmten Übertragungsparameter, und
- Kombinieren der impliziten Benutzer-ID und der expliziten Adresse, um die Herkunft des Datenpakets zu identifizieren.

2. Verfahren zum Erkennen einer impliziten Benutzer-ID nach Anspruch 1, wobei der Schritt des Bestimmens mindestens eines Übertragungsparameters Folgendes umfasst:
- Bestimmen (32) einer Spreizcodesequenz des empfangenen Datenpakets.

3. Verfahren zum Erkennen einer impliziten Benutzer-ID nach Anspruch 2, wobei die bestimmte Spreizcodesequenz eine Spreizcodesequenz mit Baumstruktur ist.

4. Verfahren zum Erkennen einer impliziten Benutzer-ID nach einem der Ansprüche 1 bis 3, wobei der Schritt des Bestimmens mindestens eines Übertragungsparameters Folgendes umfasst:
- Bestimmen (31) mindestens einer Frequenz, auf der das Datenpaket empfangen wurde.

5. Verfahren zum Erkennen einer impliziten Benutzer-ID nach einem der Ansprüche 1 bis 4, wobei das Datenpaket über ein Mehrträger-Übertragungssystem empfangen wird.

6. Verfahren zum Erkennen einer impliziten Benutzer-ID nach Anspruch 4, wobei die bestimmte mindestens eine Frequenz einem physikalischen Ressourcenblock, einer Reihe von physikalischen Ressourcenblöcken oder einem Hopping-Muster quer über eine Reihe von physikalischen Ressourcenblöcken entspricht.

7. Verfahren zum Erkennen einer impliziten Benutzer-ID nach einem der Ansprüche 1 bis 3, wobei das Datenpaket über ein SC-FDMA- oder ein DFT-vorcodiertes OFDM-Übertragungssystem empfangen wird.

8. Verfahren zum Erkennen einer impliziten Benutzer-ID nach Anspruch 5 oder 6, wobei das Datenpaket über ein OFDM- oder ein FBMC-Übertragungssystem empfangen wird.

9. Verfahren zum Erkennen einer impliziten Benutzer-ID nach einem der Ansprüche 1 bis 6, wobei der Schritt des Bestimmens mindestens eines Übertragungsparameters Folgendes umfasst:
- Bestimmen (33) der räumlichen Signatur des empfangenen Datenpakets in einem Mehrantennenempfänger.

10. Verfahren zum Erkennen einer impliziten Benutzer-ID nach einem der Ansprüche 1 bis 9, wobei der Schritt des Bestimmens mindestens eines Übertragungsparameters Folgendes umfasst:
- Bestimmen (34) des Leistungspegels des empfangenen Datenpakets.

11. Verfahren zum Erkennen einer impliziten Benutzer-ID nach einem der Ansprüche 1 bis 10, weiterhin umfassend folgenden Schritt:
- Vergleichen (35) des bestimmten Übertragungsparameters des empfangenen Datenpakets mit gespeicherten Merkmalen von registrierten Teilnehmergerätvorrichtungen, wobei die Merkmale von registrierten Vorrichtungen in einer Look-Up-Tabelle gespeichert sind.

12. Verfahren zum Erkennen einer impliziten Benutzer-ID nach einem der Ansprüche 1 bis 11, weiterhin umfassend folgenden Schritt:
- Zuweisen von Merkmalen zu den Teilnehmergerätvorrichtungen durch Vorwärts-Steuersignalisierung oder höherschichtige Steuersignalisierung.

13. Gerät (10) zum Empfangen eines Datenpakets in einem Übertragungssystem, wobei das Gerät ein Verfahren nach einem der Ansprüche 1 bis 12 durchführt.

14. Übertragungssystem zum Senden eines Datenpakets von einem Sender (12) an einen Empfänger (10), wobei das Übertragungssystem mindestens ein Gerät zum Senden (12) eines Datenpakets umfasst, das Gerät zum Senden (12) des Datenpakets eine Spreizcodesequenz zum Codieren des zu sendenden Datenpakets anwendet und das Übertragungssystem weiterhin mindestens ein Gerät zum Empfangen (10) eines Datenpakets nach Anspruch 13 umfasst.

## Revendications

1. Procédé pour détecter un ID utilisateur implicite d'un paquet de données reçu, comprenant les étapes suivantes :
- recevoir (30) un paquet de données composé d'au moins de données d'utilisateur et d'une adresse explicite additionnelle,
- déterminer (36) l'adresse explicite du paquet de données reçu,
- déterminer au moins un paramètre de transmission des données d'utilisateur du paquet de données reçu,
- déterminer (37) un ID utilisateur implicite du paquet de données en fonction du au moins un paramètre de transmission déterminé, et
- combiner l'ID utilisateur implicite et l'adresse explicite pour identifier l'origine du paquet de données.

2. Procédé pour détecter un ID utilisateur implicite selon la revendication 1, dans lequel l'étape de détermination d'au moins un paramètre de transmission comprend :
- la détermination (32) d'une séquence de code d'étalement du paquet de données reçu.

3. Procédé pour détecter un ID utilisateur implicite selon la revendication 2, dans lequel la séquence de code d'étalement déterminée est une séquence de code d'étalement de structure arborescente.

4. Procédé pour détecter un ID utilisateur implicite selon l'une des revendications 1 à 3, dans lequel l'étape de détermination d'au moins un paramètre de transmission comprend :
- la détermination (31) d'au moins une fréquence sur laquelle le paquet de données a été reçu.

5. Procédé pour détecter un ID utilisateur implicite selon l'une des revendications 1 à 4, dans lequel le paquet de données est reçu via un système de transmission multi-porteuse.

6. Procédé pour détecter un ID utilisateur implicite selon la revendication 4, dans lequel la au moins une fréquence déterminée correspond à un bloc de ressources physiques, à un ensemble de blocs de ressources physiques ou à un motif de saut à travers un ensemble de blocs de ressources physiques.

7. Procédé pour détecter un ID utilisateur implicite selon l'une des revendications 1 à 3, dans lequel le paquet de données est reçu via un système de transmission SC-FDMA ou OFDM précodé par DFT.

8. Procédé pour détecter un ID utilisateur implicite selon la revendication 5 ou 6, dans lequel le paquet de données est reçu via un système de transmission OFDM ou FBMC.

9. Procédé pour détecter un ID utilisateur implicite selon l'une des revendications 1 à 6, dans lequel l'étape de détermination d'au moins un paramètre de transmission comprend :
- la détermination (33) de la signature spatiale du paquet de données reçu dans un récepteur multi-antenne.

10. Procédé pour détecter un ID utilisateur implicite selon l'une des revendications 1 à 9, dans lequel l'étape de détermination d'au moins un paramètre de transmission comprend :
- la détermination (34) du niveau de puissance du paquet de données reçu.

11. Procédé pour détecter un ID utilisateur implicite selon l'une des revendications 1 à 10, comprenant en outre l'étape suivante : - comparer (35) les paramètres de transmission déterminés du paquet de données reçu avec des caractéristiques stockées de dispositifs d'équipement utilisateur enregistrés, les caractéristiques de dispositifs enregistrés étant stockées dans une table de consultation.

12. Procédé pour détecter un ID utilisateur implicite selon l'une des revendications 1 à 11, comprenant en outre l'étape suivante :
- assigner des caractéristiques aux dispositifs d'équipement utilisateur par signalisation de contrôle aller ou signalisation de contrôle de couche supérieure.

13. Appareil (10) pour recevoir un paquet de données dans un système de transmission, l'appareil effectuant un procédé selon l'une des revendications 1 à 12.

14. Système de transmission pour envoyer un paquet de données d'un émetteur (12) à un récepteur (10), le système de transmission comprenant au moins un appareil pour envoyer (12) un paquet de données, l'appareil pour envoyer (12) le paquet de données applique une séquence de code d'étalement pour coder le paquet de données à envoyer et le système de transmission comprend en outre au moins un appareil pour recevoir (10) un paquet de données selon la revendication 13.
